**Europäisches Patentamt**

**European Patent Office**

**Office européen des brevets**

(19)

(11) Veröffentlichungsnummer : **0 021 187**
**B1**

(12) **EUROPÄISCHE PATENTSCHRIFT**

(45) Veröffentlichungstag der Patentschrift :
**22.06.83**

(21) Anmeldenummer : **80103154.3**

(22) Anmeldetag : **06.06.80**

(51) Int. Cl.³ : **A 22 C 13/00**, A 22 C 13/02

(54) **Funktionelle Einheit aus längsweise gerafftem Verpackungsschlauch und Stützbehälter, Verfahren zu ihrer Herstellung und ihre Verwendung.**

(30) Priorität : **08.06.79 DE 2923187**

(43) Veröffentlichungstag der Anmeldung :
**07.01.81 Patentblatt 81/01**

(45) Bekanntmachung des Hinweises auf die Patenterteilung : **22.06.83 Patentblatt 83/25**

(84) Benannte Vertragsstaaten :
**AT BE CH DE FR GB IT LI NL SE**

(56) Entgegenhaltungen :
**DE A 2 511 770**
**DE A 2 733 996**
**FR A 2 303 480**

(73) Patentinhaber : **HOECHST AKTIENGESELLSCHAFT**
**Postfach 80 03 20**
**D-6230 Frankfurt/Main 80 (DE)**

(72) Erfinder : **Becker, Reinhold, Dr.**
**Am Hohen Stein 18**
**D-6200 Wiesbaden (DE)**
Erfinder : **Michel, Wolfgang**
**Am Hohen Stein 24**
**D-6200 Wiesbaden (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Funktionelle Einheit aus längsweise gerafftem Verpackungsschlauch und Stützbehälter Verfahren zu ihrer Herstellung und ihre Verwendung

Die Erfindung betrifft eine funktionelle Einheit von der im Oberbegriff des Anspruchs 1 genannten Art sowie ein Verfahren zu ihrer Herstellung und ihre Verwendung.

Fleischzubereitungen in Form von Wurstmasse kommen abgefüllt in synthetischen Schlauchhüllen in großen Mengen auf den Markt. Die künstlichen Wursthüllen bestehen entweder aus synthetischem Material oder aus bevorzugt faserverstärkten Cellulosehydratschläuchen. Bei der Herstellung von Würsten geht man von Schläuchen der genannten Art aus, die beispielsweise eine Länge von 20 m aufweisen. Diese Schläuche werden in bekannter Weise mittels üblicher Vorrichtungen längsweise unter Fältelung zu hohlzylindrischen, beidseitig offenen, selbsttragenden Stäben gerafft und dabei bzw. danach längsaxial zusammengepreßt. Derartige durch Schlauchraffung gebildete selbsttragende Hohlstäbe weisen, ausgehend von der oben genannten Ausgangsschlauchlänge, eine Länge von ca. 40 cm auf.

Zum Befüllen des den Hohlstab bildenden Verpackungsschlauchs mit Wurstmasse wird die den Hohlstab bildende Hülle zunächst an ihrem einen Ende verschlossen, sodann wird der Hohlstab mit der freien Öffnung voran auf den Füllstutzen einer Wurstabfüllmaschine aufgeschoben. Die Wurstmasse wird dann fortlaufend unter Preßdruck in den Hohlstab eingepreßt, wobei der diesen bildende Schlauch nach Maßgabe der eingepreßten Menge Wurstmasse entfältelt und mit der Masse gefüllt wird.

Genannte Hohlstäbe haben zwar herstellungsbedingt eine gewisse Formstabilität bzw. Eigensteifheit, sie sind jedoch empfindlich gegen Biegebeanspruchung und brechen dabei leicht in zwei oder mehrere, durch jeweils durch entfältelte integrale Schlauchbereiche verbundene Teile und werden dadurch praktisch unbrauchbar.

Die starke mechanische Beanspruchung des den Hohlstab bildenden Schlauchs beim Abfüllvorgang macht es erforderlich, daß man den Hohlstab aus Cellulosehydrat-Schlauch üblicherweise vor der Befüllung wässert; infolge der dabei erfolgenden Wasseraufnahme und Quellung des Schlauchs besteht die Gefahr unerwünschter Längenveränderung sowie Verringerung der Eigensteifigkeit des Hohlstabs; hierdurch wird dieser für seine weitere bestimmungsgemäße Verwendung oft unbrauchbar.

Die Gefahr, daß der Hohlstab bei seiner Handhabung seine ursprüngliche Form und Abmessung infolge der genannten Einwirkung verliert, ist dann besonders groß, wenn die den Hohlstab bildende Schlauchhülle relativ dickwandig ist, beispielsweise eine Wanddicke von 0,07 mm besitzt, und einen verhältnismäßig großen Innendurchmesser, beispielsweise einen solchen von 40 mm, aufweist.

Die zur Behebung des genannten Mangels bekannte funktionelle Einheit gemäß FR-A-2 303 480, von der die Erfindung ausgeht, hat jedoch den Nachteil, daß bei ihrer Verwendung unerwünschte Rückstülpung der Hüllenüberstände der den Stützbehälter bildenden Stützhülle nicht mit ausreichender Sicherheit verhindert wird; selbst zusätzliche, jeweils die Außenseite der Hüllenüberstände umgebende Klemmringelemente wirken nicht hinreichend sicher gegen unerwünschte Rückstülpung der Hüllenüberstände.

Der Erfindung liegt deshalb die Aufgabe zugrunde, die bekannte funktionelle Einheit derart weiterzubilden, daß bei deren bestimmungsgemäßer Verwendung Form und Abmessung des den Hohlstab umgebenden Stützbehälters sowie dessen Anordnung um den Hohlstab sich nicht von selbst zu verändern vermag, d. h. daß der Stützbehälter permanent formstabil ausgebildet ist, und daß eine unerwünschte Rückstülpung der Hüllenüberstände nahezu ausgeschlossen ist.

Die der Erfindung zugrunde liegende Aufgabe wird durch eine funktionelle Einheit gemäß Anspruch 1 sowie durch das im Anspruch 3 angegebene Verfahren und die im Anspruch 4 genannte Verwendung gelöst. Anspruch 2 betrifft eine Weiterbildung der funktionellen Einheit.

Die funktionelle Einheit ist aus einem selbsttragenden Hohlstab aus einer längsweise gerafften Länge Verpackungsschlauch, bevorzugt solchem auf Basis von faserverstärktem Cellulosehydrat, einem einzigen Stück gitterartig strukturiert ausgebildeter, schlauchförmiger Hülle bestimmter Länge mit gleichbleibendem kreisförmigem Querschnitt und zwei formstabileigensteifen Sternscheiben mit zentraler und vorzugsweise kreisförmiger Öffnung aufgebaut.

Die Länge des Stützhüllenstücks ist in bezug auf die Hohlstablänge derart bemessen, daß der im Stützhüllenhohlraum angeordnete Hohlstab jeweils endseitig von bevorzugt jeweils gleichlangen integralen Stützhüllenüberständen überragt wird. Das Stützhüllenstück kann auch derart ausgebildet sein, daß jeweils nur seine Überstände gitterartig-strukturiert sind. Die integralen Stützhüllenüberstände haben jeweils eine Länge, die wenigstens dem doppelten Stützhüllendurchmesser entspricht. Der Innendurchmesser der Stützhülle ist dem Hohlstabaußendurchmesser angepaßt. Die Stützhülle besteht vorteilhaft aus Kunststoff, insbesondere aus Polyvinylchlorid, Polyamid, bevorzugt jedoch aus Polyäthylen oder Polypropylen.

Als Sternscheiben werden am äußeren Umfang sternartig gezackt ausgebildete flächige Körper mit planen parallel zueinander verlaufenden Oberseiten bezeichnet. Die inneren Umfangswände der Sternscheiben begrenzen deren zentrale Kreisöffnungen. Die Sternscheiben der funktionellen Einheit sind bevorzugt gleichartig bezüglich Form und Abmessung ausgebildet. Die Sternscheiben sind wenigstens dreizackig mit symmetrischer Anordnung ihrer Zacken zum Scheibenmittelpunkt ausgebildet. Bevorzugt besitzen die Sternscheiben mehr als 3 Zacken, insbesondere eine große Zahl symmetrisch zueinander angeordneter Zacken.

Die Zacken der Sternscheiben sind bevorzugt jeweils von gleicher Gestalt und gleicher Abmessung. Die Zacken können an ihren verjüngten Enden in Draufsicht abgerundet oder abgeflacht ausgebildet sein.

Die Gestalt und Abmessung der Sternscheibenzacken ist der der Gitteröffnungen der schlauchförmigen Stützhülle derart angepaßt, daß die Zacken zum kraftschlüssigen Eingriff in diese befähigt sind.

Bevorzugt ausgebildete Sternscheiben sind dadurch individualisiert, daß ihre gleichlangen Zacken auf einer gemeinsamen, den äußeren Sternscheibenumfang begrenzenden, fiktiven Kreislinie liegen, deren Mittelpunkt mit dem Sternscheibenmittelpunkt übereinstimmt. Die Durchmesser der jeweils den äußeren Umfang von Sternscheiben begrenzenden fiktiven Kreislinien sind größer als die Innendurchmesser der gitterartig strukturiert ausgebildeten schlauchförmigen Stützhüllen.

Die Sternscheibenzacken können auch dornartig ausgebildet sein.

Der Begriff Sternscheibe mit zentraler Kreisöffnung soll definitionsgemäß auch quadratische Scheiben mit zentraler Kreisöffnung sowie solche in Gestalt gleichseitiger Dreiecke mit zentraler Kreisöffnung umfassen.

Die Sternscheiben bestehen bevorzugt aus Kunststoff, insbesondere aus Polyäthylen und Polypropylen, ganz besonders bevorzugt aus Polyvinylchlorid. Die Dicke der Sternscheiben ist nicht kritisch solange hinreichende Eigensteifigkeit derselben gewährleistet ist.

Der Durchmesser der zentralen Kreisöffnungen der Sternscheiben ist jeweils dem Durchmesser des Hohlstabs angepaßt.

Innerhalb der funktionellen Einheit wirken die Sternscheiben funktionell mit der gitterartig strukturiert ausgebildeten Stützhülle unter Bildung eines permanent formstabilen, den Hohlstab umgebenden Stützbehälters zusammen.

Der am äußeren Umfang des Hohlstabs anliegende Teil des Stützbehälters wird als Mantel bezeichnet.

Die funktionelle Einheit weist eine baulichstrukturelle Ausbildung auf, die entsteht, wenn man einen Hohlstab im Hohlraum einer schlauchförmigen gitterartig strukturiert ausgebildeten Stützhülle derart anordnet, daß die Stützhülle die Hohlstabenden jeweils mit bevorzugt gleichlangen Überständen überragt, auf die Überstände der Stützhülle jeweils Sternscheiben mit zentralen Kreisöffnungen derart aufschiebt, daß deren inneren Umfangswände den Außenseiten der Überstände der Stützhülle preßeng anliegen und die Sternscheiben gegen die Hohlstabstirnseiten preßt, die Überstände der Stützhülle dann jeweils nach außen und um etwa 180° über die Sternscheiben stülpt und zugleich die Umstülpungen längsaxial strafft und Zacken der Sternscheiben in kraftschlüssigen Eingriff mit Gitteröffnungen der Umstülpungen bringt.

Nachfolgend wird die Herstellung einer erfindungsgemäßen, funktionellen Einheit unter Verwendung der vorgenannt erläuterten Elemente beschrieben. Ein Hohlstab, beispielsweise ein solcher aus längsweise gerafftem Schlauch aus faserverstärktem Cellulosehydrat, wird derart im Hohlraum der schlauchförmigen, gitterartig strukturierten Hülle, die beispielsweise aus Polyäthylen besteht, angeordnet, daß diese jeweils über die Hohlstabenden gleichlang hinausragende Hüllenüberstände bildet.

Auf die längsaxialen Hüllenüberstände werden dann jeweils Sternscheiben beispielsweise solche aus Polyvinylchlorid, die beispielsweise 24 symmetrisch zueinander angeordnete Zacken aufweisen, jeweils in Richtung auf den Hohlstab zu geschoben und gegen seine Enden gepreßt.

Durch die Dimensionierung der zentralen Kreisöffnungen der Sternscheiben einerseits und des Außendurchmessers der Stützhülle andererseits werden dabei jeweils die an die inneren Umfangswände der Sternscheibenkreisöffnungen angrenzenden Bereiche der Stützhüllenüberstände entsprechend radial verengt; die Stützhüllenüberstände werden jeweils im zum Stützhüllenmantel nahen Bereich durch eine Sternscheibenoberfläche auf die Hohlstabstirnwände angepreßt. Unter dem Anpreßdruck der Sternscheiben aufrecht erhaltenden Bedingungen, beispielsweise mit Hilfe geeigneter die Sternscheiben in ihrer Lage zum Hohlstab fixierenden Stempeleinrichtung werden dann die Hüllenüberstände außen und um 180° nach unten und über die Sternscheiben gestülpt und zugleich längsaxial gestrafft und Zacken der Sternscheiben kraftschlüssig in Gitteröffnungen der Stützhüllenumstülpungen zum Eingriff gebracht. Nachdem die Stützhüllenumstülpungen in kraftschlüssige Verbindung mit den Sternscheiben gebracht sind, wird die die Hüllenüberstände straffende Kraft aufgehoben.

Das längsweise Straffen der nach außen und 180° nach unten umgestülpten Stützhüllenüberstände kann beispielsweise dadurch erfolgen, daß man an deren Enden jeweils zangenartig ausgebildete Elemente angreifen läßt, mit Hilfe deren längsaxiale Zugkraft auf die Überstände ausgeübt wird, die deren Straffung zur Folge hat.

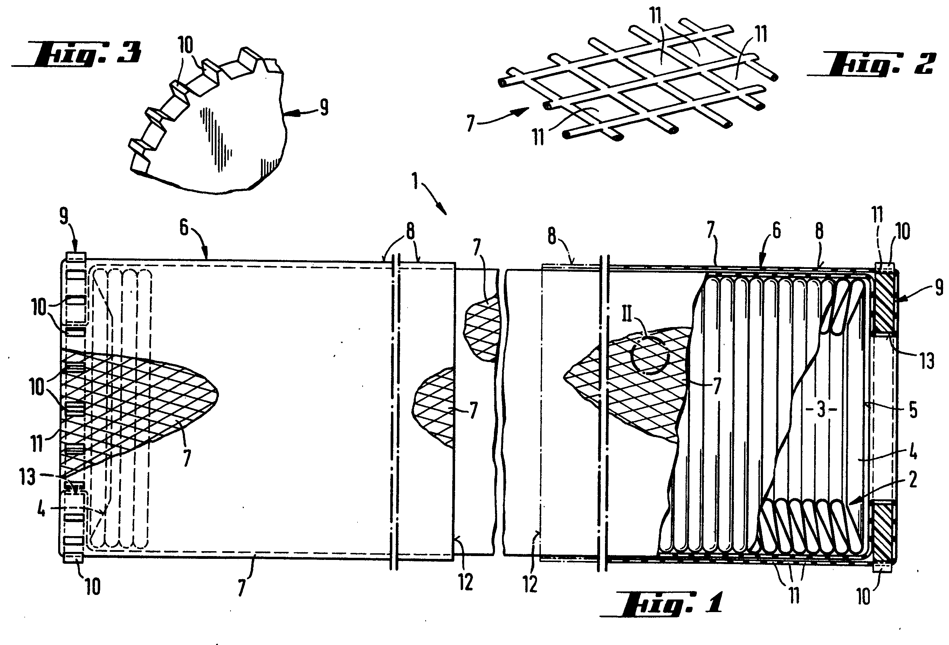

Nachfolgend wird die Erfindung anhand der Fig. 1 bis 3 erläutert:

In der Zeichnung (Fig. 1) bedeutet 1 die funktionelle Einheit in ihrer Gesamtheit, 2 bedeutet den Hohlstab aus längsweise gerafftem Verpackungsschlauch, 3 sein Hohlraum, 4 seine Hohlraummündungen, 5 ist die Stirnseite des Hohlstabs. 6 ist der den Hohlstab unter Freilassung seiner Hohlraummündungen umgebende Stützbehälter in seiner Gesamtheit, 7 das ihn bildende gitterartig strukturierte Stück schlauchförmiger Hülle, 8 ist ein nach außen und um 180° nach hinten umgestülpter Hüllenüberstand, 9 ist eine von der Umstülpung 8 umgriffene Sternscheibe, deren Zacken 10 (Fig. 3) in die Gitteröffnungen 11 (Fig. 2) der Umstülpung kraft- und formschlüssig eingreifen. 12 ist das, dem Stützbehältermantel anliegende Ende der Hüllenumstülpung. 13 ist die Begrenzungskante der zentralen Kreisöffnung der Sternscheibe.

**Ansprüche**

1. Funktionelle Einheit (1), bestehend aus einem selbsttragenden Hohlstab (2) aus längsweise geraffter schlauchförmiger Verpackungshülle, insbesondere aus faserverstärkem Cellulosehydrat, einem den Hohlstab (2) unter Freilassung seiner Hohlraummündungen (4) einhüllenden Stützbehälter (6), der aus einem einzigen Stück gitterartig strukturiert ausgebildeter schlauchförmiger Hülle (7) besteht und dessen jeweiliges Ende einen die Länge des Hohlstabs (2) überragenden Hüllenüberstand (8) bildet, und aus flächenhaften Scheibenelementen (9) am jeweiligen Ende des Stützbehälters (6) mit zentraler und bevorzugt kreisförmiger Öffnung zur Fixierung des Stützbehälters (6), wobei die an die Stirnseite (5) des Hohlstabs (2) angrenzenden, auf die äußere Oberfläche des jeweiligen Hüllenüberstands (8) mit ihrer zentralen Öffnung aufgeschobenen Scheibenelemente (9) jeweils von einer Umstülpung des Hüllenüberstands (8) umfaßt sind und die Umstülpung sich vom Bereich der Stirnseite (5) des Hohlstabs (2) durch die zentrale Öffnung und über den äußeren Umfang des jeweiligen Scheibenelements (9) in Richtung zur Hohlstabmitte erstreckt, dadurch gekennzeichnet, daß die Scheibenelemente als Sternscheiben (9) an ihrem äußeren Umfang sternartig gezackt ausgebildet sind, wobei wenigstens drei Zacken (10) symmetrisch zum Mittelpunkt der Sternscheibe (9) angeordnet sind und daß diese Zacken (10) kraftschlüssig in Gitteröffnungen (11) des jeweiligen umgestülpten Hüllenüberstands eingreifen.

2. Funktionelle Einheit (1) nach Anspruch 1, dadurch gekennzeichnet, daß der Stützbehälter (6) aus einer gitterartig strukturierten Hülle (7) aus Polyäthylen besteht.

3. Verfahren zur Herstellung einer funktionellen Einheit (1) nach Anspruch 1 oder 2, bei dem man einen Hohlstab (2) aus längsweise geraffter schlauchförmiger Verpackungshülle im Hohlraum einer gitterartig strukturiert ausgebildeten schlauchförmigen Stützhülle (7) anordnet, auf die die Hohlstabenden überragenden Stützhüllenüberstände (8) Scheibenelemente (9) mit jeweils zentraler und bevorzugt kreisförmiger Öffnung aufschiebt und gegen die Hohlstabstirnseiten (5) preßt, die Stützhüllenüberstände (8) um den äußeren Umfang der Scheibenelemente (9) in Richtung zur Hohlstabmitte umstülpt und die umgestülpten Stützhüllenüberstände (8) zugleich längsaxial strafft, dadurch gekennzeichnet, daß man die Scheibenelemente in Form von Sternscheiben (9), welche an ihrem äußeren Umfang sternartig gezackt ausgebildet sind, wobei wenigstens drei Zacken (10) symmetrisch zum Mittelpunkt der Sternscheibe (9) angeordnet sind, mit diesen Zacken (10) in den Gitteröffnungen (11) des jeweiligen umgestülpten Stützhüllenüberstands (8) kraftschlüssig zum Eingriff bringt.

4. Verwendung einer funktionellen Einheit nach Anspruch 1 oder 2 zur Herstellung von Würsten.

**Claims**

1. Functional unit (1) comprising : a self-supporting hollow rod (2) comprised of a tubular packaging sheath shirred in the longitudinal direction which in particular is made from fiber-reinforced cellulose hydrate ; a supporting sheath (6) which surrounds the hollow rod (2) leaving free its central apertures (4), is comprised of a single piece of a tubular sheathing (7) having a grid-like structure and the two ends of which are longer than the hollow rod (2), thus forming protruding sheathing ends (8) ; and planar disc elements (9) at the two ends of the supporting sheath (6) which have central, preferably circular apertures and serve to fix the support sheathing (6), whereby the disc elements (9) which are adjacent to the end surfaces (5) of the hollow rod (2) and are slid with their central apertures over the external surface of the respective protruding sheathing end (8) are each surrounded by a turned-back portion of the protruding sheathing ends (8), said turned-back portions extending from the end surfaces (5) of the hollow rod (2) through the central aperture and over the external peripherial surface of the respective disc element (9), in the direction of the middle of the hollow rod (2), said functional unit (1) being characterized in that the disc elements have the shape of star discs (9) possessing a plurality of point-like projections around their outer surfaces, whereby at least three points (10) are arranged symmetrically relative to the central point of each star disc (9), and in that these points (10) firmly engage the grid openings (11) of the protruding sheathing end (8).

2. Functional unit (1) as claimed in Claim 1, characterized in that the supporting sheath (6) comprised of a tubular sheathing having a grid-like structure (7) is made of polyethylene.

3. Process for preparing a functional unit (1) as claimed in Claim 1 or 2, in which a hollow rod (2) comprised of a longitudinally shirred tubular packaging sheath is placed in the interior of a tubular supporting sheath (7) having a grid-like structure, disc elements having central, preferably circular apertures are slid over the ends (8) of the supporting sheath which protrude from the ends of the hollow rod and are pressed against the end surfaces (5) of the hollow rod, the protruding ends (8) of the supporting sheath are turned back over the outer surface of the disc elements (9) in the direction of the middle of the hollow rod and these turned-back protruding sheathing ends (8) are at the same time tightened in the longitudinal direction, said process being characterized in that the disc elements which are in the form of star discs (9) and have a plurality of point-like projections spaced around their outer circumferences, whereby at least three points (10) are arranged symmetrically relative to the center point of each star disc (9), are firmly engaged with these points (10) in the grid openings (11) of the respective turned-back portions of the protruding sheathing ends (8).

4. Use of a functional unit as claimed in Claim 1 or 2 for the production of sausages.

**Revendications**

1. Unité fonctionnelle (1) composée d'une chenille cylindrique creuse (2) non étayée, constituée par une gaine de rétention tubulaire plissée longitudinalement, de préférence une gaine à base d'hydrate de cellulose renforcé de fibres, par un récipient de renforcement (6) qui enrobe la chenille cylindrique creuse (2), à l'exception de ses ouvertures frontales (4), et qui est constituée d'une section de gaine souple (7), réalisée d'une seule pièce et présentant une structure en forme de grille, dont chaque extrémité constitue une zone excédentaire (8) qui dépasse le corps de la chenille cylindrique creuse (2), et par des disques à surfaces planes (9), fixés sur chaque extrémité du récipient de renforcement (6) et présentant, pour la fixation de ce récipient de renforcement (6), une ouverture centrale de préférence circulaire, de manière que les disques (9) glissés sur chacune des zones excédentaires par leur ouverture centrale, et maintenus ainsi à la hauteur de la paroi frontale (5) de la chenille cylindrique creuse (2), soient enrobés chacun d'un repli de la zone excédentaire (8), lequel, passant par l'ouverture centrale et le périmètre extérieur du disque correspondant (9), s'étend en direction de la partie médiane de la chenille cylindrique creuse (2), cette unité fonctionnelle étant caractérisée en ce que les disques sont des disques étoilés (9) portant des dents (10) qui sont découpées dans la zone périphérique extérieure, et dont trois dents (10) au moins sont prévues qui s'étendent symétriquement par rapport au centre du disque (9), et en ce que ces dents (10) pénètrent et se calent étroitement dans les ouvertures (11) de la grille de la zone excédentaire retroussée.

2. Unité fonctionnelle selon la revendication 1, caractérisée en ce que le récipient de renforcement (6) est constitué par une gaine (7) en forme de grille en polyéthylène.

3. Procédé en vue de la fabrication d'une unité fonctionnelle (1) selon l'une des revendications 1 ou 2, réalisée en plaçant une chenille cylindrique creuse (2), sous forme d'une gaine de rétention tubulaire plissée longitudinalement, dans la cavité d'une gaine de renforcement tubulaire (7) en forme de grille, en glissant ensuite des disques à ouverture centrale, de préférence circulaire, sur les zones excédentaires (8) dépassant les extrémités de la chenille cylindrique creuse (2), avant de les appliquer contre les parois frontales (5) de cette chenille cylindrique (2), et en retroussant finalement les zones excédentaires (8) sur la paroi circonférentielle extérieure des disques (9), en lissant simultanément ces zones excédentaires (8) dans le sens de l'axe longitudinal, procédé caractérisé en ce que les disques sous forme étoilée (9), portant des dents (10) qui sont découpées dans la zone périphérique extérieure, et dont trois au moins sont prévues qui s'étendent symétriquement par rapport au centre du disque (9), pénètrent et se calent étroitement dans les ouvertures (11) de la grille de la zone excédentaire retroussée (8).

4. Utilisation d'une unité fonctionnelle selon l'une des revendications 1 ou 2 pour la fabrication de saucisses.

**Fig. 3**

**Fig. 2**

**Fig. 1**

0 021 187